# FASCICULE DE BREVET EUROPEEN

(11) **EP 3 051 777 B1**
(45) Date de publication et mention de la délivrance du brevet: **23.09.2020**
(21) Numéro de dépôt: 16153081.1
(22) Date de dépôt: 28.01.2016
(51) Int. Cl.: H04L 29/08, H04N 7/18, B64D 11/00

(54) **RÉSEAU DE COMMUNICATION POUR AVION**
KOMMUNIKATIONSNETZ FÜR FLUGZEUG
AIRCRAFT COMMUNICATION NETWORK

(30) Priorité: 02.02.2015 FR 1550768
(43) Date de publication de la demande: 03.08.2016
(73) Titulaire: SAFRAN AEROTECHNICS, 78370 Plaisir (FR)
(72) Inventeur: BOIGAS, Patrick, 78760 Jouars Ponchartrain (FR)
(74) Mandataire: Plasseraud IP

(56) Documents cités:
- US-A1- 2002 093 564
- US-A1- 2005 278 753
- US-A1- 2014 218 544

## Description

La présente invention concerne un réseau de communication pour avion, et un avion qui est équipé d'un tel réseau de communication.

Un réseau de communication pour cabine d'avion, tel qu'existant à ce jour, comprend :
- des terminaux de divertissement en vol, ou «In-Flight Entertainment terminais» en anglais, qui sont destinés individuellement à des passagers de l'avion ;
- un système d'adressage ; et
- des liaisons de communication qui relient entre eux les terminaux et le système d'adressage.

De tels réseaux sont utilisés notamment pour mettre une bibliothèque de films ou de jeux à la disposition de chaque passager, et/ou lui communiquer des informations sur l'avancement et les conditions du vol. Pour cela, le système d'adressage peut comprendre un ou plusieurs serveurs et/ou des commutateurs. Le brevet US2002/0093564 A1 est un exemple d'un tel réseau.

A partir de cette situation, un but de la présente invention consiste à fournir à chaque passager une aide pour faciliter ses déplacements à l'intérieur de l'avion, en utilisant le réseau de communication interne à l'avion.

Un but annexe de l'invention peut être de réduire l'encombrement des voies de circulation internes à l'avion, en évitant que des passagers rejoignent inutilement des zones de l'avion où se trouve déjà une affluence.

Un autre but de l'invention peut être de réduire les déplacements des membres de l'équipage dans l'avion.

Pour atteindre l'un au moins de ces buts ou d'autres, un premier aspect de l'invention propose un réseau de communication selon la revendication 1. Des modes de réalisations préférés de l'invention sont décrits dans les revendications dépendantes.

Ainsi le réseau de communication interne à l'avion est complété par au moins une caméra aussi interne à l'avion, afin de communiquer au passager qui en fait la requête, des informations sur la zone de la caméra. Il est ainsi possible pour le passager de connaître un état d'encombrement ou d'affluence de certaines zones de l'avion, et de prévoir ses déplacements en fonction de cette information. Des déplacements inutiles par les passagers peuvent ainsi être évités.

De plus, chaque terminal de divertissement en vol peut comprendre un écran, et les données qui sont transmises par le système d'adressage en réponse à la commande, peuvent comprendre au moins un extrait de l'image acquise par la caméra. Le terminal de divertissement en vol est alors adapté pour afficher au moins cet extrait d'image sur l'écran. Dans ce cas, le réseau peut comprendre en outre au moins une unité de filtrage, qui est connectée afin d'être activée pour chaque extrait d'image transmis à l'un des terminaux de divertissement en vol, l'unité de filtrage étant adaptée pour rechercher un visage ou une silhouette humaine à l'intérieur de l'extrait d'image, et pour remplacer ce visage ou silhouette humaine par un masque ou un brouillage dans l'extrait d'image tel qu'il est affiché sur l'écran. L'utilisation d'un tel filtrage permet de satisfaire la législation qui est en vigueur dans certains pays, concernant le respect de la vie privée et le droit individuel à l'image.

De plus le réseau peut comprendre en outre une unité de comptage, connectée de façon à être activée pour chaque image qui est traitée en réponse à une commande recueillie par l'un des terminaux de divertissement en vol, cette unité de comptage étant agencée pour compter des personnes qui sont présentes dans l'image, et transmettre un résultat de comptage au terminal de divertissement en vol en tant que donnée résultant de l'acquisition d'image. Le terminal de divertissement en vol est alors adapté pour communiquer ce résultat de comptage au passager correspondant. L'information sur l'affluence qui est présente dans la zone desservie par la caméra, est ainsi délivrée directement sous la forme d'un nombre de passagers présents dans cette zone. Lorsqu'il s'agit d'une zone d'accès à un bar, à un comptoir de restauration ou à des toilettes internes à l'avion, le passager connaît ainsi la longueur de la file d'attente

Possiblement, le réseau peu comprendre plusieurs caméras qui sont destinées à être installées à l'intérieur de l'avion, de sorte qu'un champ optique de chaque caméra comprenne une zone d'accès collective ou une zone à utilisation partagée interne à l'avion, qui est différente de la zone comprise dans le champ optique de chaque autre caméra. Dans ce cas, chaque caméra est connectée aux liaisons de communication du réseau de sorte qu'au moins une donnée résultant d'au moins une acquisition d'image qui a été réalisée par l'une quelconque des caméras, soit transmise au terminal de divertissement en vol qui a recueilli une commande concernant cette caméra. Alors, dans une telle mise en œuvre à plusieurs caméras, le terminal de divertissement en vol est adapté pour communiquer chaque donnée au passager, en liaison avec une indication de la zone interne à l'avion où est installée la caméra qui est à l'origine à cette donnée. Par exemple, chaque terminal de divertissement en vol peut comprendre un écran, et être adapté pour afficher au moins une partie d'un plan intérieur de l'avion, et afficher chaque donnée en liaison avec une localisation dans le plan de la zone desservie par la caméra qui est à l'origine de la donnée.

Le réseau peut encore comprendre en outre au moins un terminal de surveillance qui est destiné à un membre d'équipage de l'avion, et qui est connecté aux liaisons de communication du réseau de sorte qu'au moins une donnée résultant d'au moins une acquisition d'image qui a été réalisée par l'une quelconque des caméras soit transmise au terminal de surveillance. Le terminal de surveillance est alors adapté pour communiquer la donnée au membre d'équipage. Le membre d'équipage peut ainsi disposer d'une information équivalente à celle qui est accessible par chaque passager, concernant l'affluence et l'encombrement des différentes zones intérieures de l'avion.

Possiblement, chaque terminal de divertissement en vol peut être adapté en outre pour recueillir une commande d'appel, et les liaisons de communication sont adaptées pour transmettre la commande d'appel au terminal de surveillance, ce dernier étant adapté pour communiquer la commande d'appel au membre d'équipage, et le réseau étant adapté pour établir une session de communication bidirectionnelle entre un terminal de divertissement en vol qui a recueilli une commande d'appel et le terminal de surveillance qui est destinataire de cette commande d'appel. Ainsi, le passager peut poser une question au membre d'équipage sans qu'aucun des deux ne se déplace pour cette question. L'affluence dans les couloirs de circulation de l'avion est ainsi diminuée. De façon préférée, le réseau de communication peut être adapté pour que la session de communication bidirectionnelle entre le terminal de divertissement en vol qui a recueilli la commande d'appel et le terminal de surveillance qui est destinataire de cette commande d'appel comprenne des flux audio, le terminal de divertissement en vol et le terminal de surveillance étant pourvus chacun d'un microphone et d'au moins un écouteur. La communication entre le passager et le membre d'équipage est ainsi facilitée et plus naturelle. Eventuellement, la session de communication peut aussi comprendre des flux vidéo lorsque les deux terminaux sont équipés de caméras locales et d'écrans.

Un second aspect de l'invention propose un avion selon la revendication 8. Chaque zone d'accès collective ou zone à utilisation partagée qui est desservie par l'une des caméras peut alors être sélectionnée parmi une zone d'accès à un bar, une zone d'attente à un comptoir de restauration ou de vente d'articles variés, une zone de détente, un couloir de circulation des passagers, un vestibule, une zone intermédiaire entre deux salles de cabine, et une zone d'attente à une cabine de toilettes, de lavabo ou de change pour bébé.

D'autres particularités et avantages de la présente invention apparaîtront dans la description ci-après d'exemples de réalisation non limitatifs, en référence aux dessins annexés, dans lesquels :
- la figure 1 est un plan intérieur d'avion à deux niveaux, en élévation ; et
- la figure 2 est un schéma montrant certains éléments d'un réseau de communication pour avion, conforme à l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

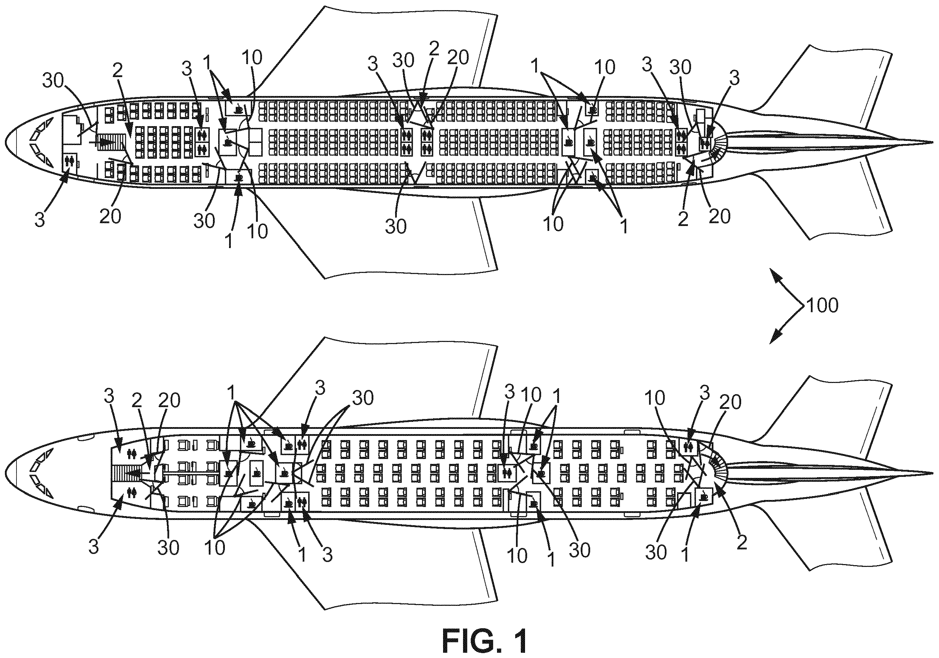

L'application de l'invention à un avion à deux niveaux, ou deux ponts, conforme à la figure 1 est prise à titre d'exemple, mais il est entendu que l'invention peut être appliquée à tout avion qui transporte des passagers, quelque soit la taille de l'avion, et y compris des avions à un seul pont.

Les références qui sont indiquées dans la figure 1 ont les significations suivantes :
- 100: l'avion dans son ensemble
- 1: bars ou comptoirs de restauration ou de vente d'articles variés
- 2: zones de détente, couloirs de circulation des passagers, vestibules ou zones intermédiaires entre deux cabines
- 3: cabines de toilettes, de lavabo ou de change pour bébé
- 10: caméras dédiées aux zones des bars ou des comptoirs de restauration ou de vente d'articles variés
- 20: caméras dédiées aux zones de détente, couloirs de circulation des passagers, vestibules ou zones intermédiaires entre deux cabines
- 30: caméras dédiées aux zones d'attente aux cabines de toilettes, de lavabo ou de change pour bébé

L'avion 100 est équipé d'un réseau intérieur de communication qui comprend un terminal de divertissement en vol associé à chaque siège de passager, et un système d'adressage qui permet d'envoyer des programmes de divertissement, des films, des jeux, des informations sur le déroulement du vol, etc., individuellement à chaque terminal de divertissement en vol. Le réseau intérieur de communication comprend aussi, de façon connue, des liaisons de communication et un ou plusieurs serveurs et/ou des commutateurs de communication pour sélectionner et envoyer les données de divertissement ou d'information, en fonction de commandes de sélection qui sont saisies par chaque passager séparément au niveau de son terminal de divertissement en vol. De façon connue aussi, chaque terminal de divertissement en vol comprend au moins un écran d'affichage, des écouteurs et des moyens de saisie de commande qui peuvent être des zones tactiles sur l'écran, des boutons dédiés, un clavier, etc.

Chacune des caméras 10-30 peut être adaptée pour saisir des images dans le domaine spectral visible, ou dans le domaine spectral proche infrarouge, ou encore dans le domaine spectral infrarouge thermique. Eventuellement, chaque caméra peut être adaptée pour saisir simultanément des images spectrales dans plusieurs de ces domaines spectraux, et des images de combinaison sont ensuite construites, qui résultent de combinaisons de plusieurs images spectrales qui ont été saisies simultanément pour le même champ optique mais pour des intervalles spectraux différents. L'utilisation de telles images de combinaison ou multispectrales permet notamment de réduire une probabilité de fausse détection de personnes tout en conservant une information de couleurs naturelles.

Les caméras 10-30 sont installées dans l'avion 100 pour saisir des images des zones d'accès collectives ou des zones à utilisation partagée 1 à 3. Chaque caméra est orientée pour contenir dans son champ optique une partie au moins de la zone correspondante, afin que les images qui sont saisies montrent les passagers qui sont éventuellement présents dans cette zone. Ainsi, la visualisation des images qui sont saisies par chaque caméra fournit une information sur l'affluence dans la zone correspondante, ou sur la disponibilité de la commodité à laquelle la zone est dédiée. Pour raison de clarté, les caméras 10-30 sont indiquées dans la figure 1 sous forme de secteurs angulaires qui correspondent aux champs optiques de ces caméras.

Chaque passager peut donc, avant de quitter son siège pour rejoindre une zone de sa convenance à l'intérieur de l'avion 100, interroger son terminal de divertissement en vol pour visualiser les images qui sont saisies par une ou plusieurs des caméras 10-30. Pour cela, il saisit une commande dédiée sur le terminal, et les images qui sont saisies par une ou plusieurs des caméras peuvent apparaître en temps réel sur l'écran du terminal. Ces images qui montrent l'affluence et les états des files d'attente aux commodités et services disponibles dans l'avion, permettent au passager de sélectionner celle des zones de commodités ou de services pour laquelle l'attente est la plus courte. Eventuellement, les images peuvent inciter le passager à retarder son déplacement dans l'avion si l'affluence qui est visualisée est trop importante. Les images des caméras 20 peuvent aider le passager à sélectionner le trajet à l'intérieur de l'avion qui est le moins encombré, pour rejoindre la zone de commodité ou de service qu'il souhaite.

Dans des premiers modes de réalisation de l'invention, les images d'une seule des caméras 10-30 sont affichées pendant une durée sur l'écran du terminal de divertissement en vol, et la commande qui est saisie par le passager sur son terminal de divertissement en vol sélectionne la caméra dont les images sont affichées.

Dans d'autres modes de réalisation de l'invention, l'écran du terminal de divertissement en vol peut être divisé en plusieurs fenêtres, et les images qui sont saisies par plusieurs des caméras 10-30 sont affichées simultanément dans des fenêtres qui sont affectées respectivement aux caméras. Dans ce cas, une indication de chaque zone dans l'avion qui est visualisée séparément dans une fenêtre peut être ajoutée aux images, pour que le passager identifie cette zone facilement.

Dans de tels modes de réalisation de l'invention, les données qui sont transmises par le système d'adressage au terminal de divertissement en vol, sont directement les images saisies par les caméras. Toutefois, la législation en vigueur dans certains pays peut restreindre le droit de chaque passager de visualiser ainsi les autres passagers de l'avion. Dans ce cas, chaque image peut être traitée entre sa saisie par l'une des caméras et son affichage sur l'écran de l'un des terminaux de divertissement en vol, pour éviter que chaque visage ou chaque silhouette puisse être reconnue. Un tel traitement intermédiaire peut être réalisé par une unité de détection de visages ou de silhouettes humaines, qui peut procéder notamment par recherche de points caractéristiques dans chaque image, puis un brouillage ou un masque est superposé localement dans chaque image qui est affichée, à l'emplacement du visage ou de chaque silhouette. Un tel brouillage ou masque est sélectionné pour satisfaire le respect de la vie privée et du droit individuel à l'image, tout en fournissant l'information sur la présence de passagers dans la zone voulue, avec leur nombre.

Dans des modes alternatifs de réalisation de l'invention, les données transmises par le système d'adressage au terminal de divertissement en vol peuvent résulter d'un traitement des images qui sont saisies par les caméras. Par exemple, la présence de visages ou de silhouettes humaines est systématiquement recherchée dans chaque image, et le nombre des personnes qui sont présentes dans le champ optique de chaque caméra est déterminé à partir des visages ou silhouettes séparées qui ont été détectées dans chaque image. Ce nombre peut alors être transmis lui-même au terminal de divertissement en vol sur lequel la commande a été saisie. Par exemple, un plan de l'avion peut être affiché sur l'écran du terminal, et les nombres de personnes sont affichés dans des inserts qui sont reliés visuellement aux endroits dans le plan qui correspondent aux zones intérieures concernées de l'avion. Eventuellement, les nombres de personnes peuvent être remplacés pour l'affichage par d'autres modes de représentation ou d'indication plus visuels, par exemple à base de logos.

Dans des modes préférés de réalisation de l'invention, le réseau de communication comprend en plus un ou plusieurs terminaux supplémentaires, qui est (sont) destiné(s) aux membres d'équipage de l'avion, notamment pour permettre une surveillance des déplacements et de l'activité dans la cabine. Pour cette raison, ces terminaux supplémentaires ont été appelés terminaux de surveillance dans la partie générale de la description. Ces terminaux de surveillance peuvent être dotés des mêmes fonctionnalités de visualisation des images saisies par les caméras 10-30, ou des informations et des données qui sont déduites de ces images, que les terminaux de divertissement en vol. Toutefois, pour les terminaux de surveillance, il peut ne pas être nécessaire qu'une commande soit saisie par le membre d'équipage pour que les images ou les données qui sont déduites de celles-ci soient affichées.

Une fonctionnalité supplémentaire du réseau de communication selon l'invention, qui est optionnelle, consiste à permettre une communication entre un membre de l'équipage à l'un des terminaux de surveillance, et un passager à l'un des terminaux de divertissement en vol. Une telle communication peut être initiée par le passager, par saisie d'une commande d'appel sur son terminal. Cette commande d'appel est transmise au terminal de surveillance par les liaisons de communication internes à l'avion, de sorte que le membre d'équipage puisse répondre aux questions du passager. Pour cela, une session de communication bidirectionnelle, de préférence full-duplex, est établie entre les deux terminaux pour permettre un échange de questions et de réponses entre le membre d'équipage et le passager. Préférablement, les deux terminaux peuvent être équipés de microphones en plus des écouteurs, pour permettre la transmission de parole. Ainsi, des flux audio peuvent être transmis par le réseau de communication entre les deux terminaux, dans les deux sens. Possiblement, des flux vidéo peuvent aussi être transmis simultanément entre les deux terminaux qu'ils sont chacun équipés de caméras locales, et/ou la commande d'appel initiale peut être produite alternativement par le membre d'équipage à partir du terminal de surveillance, en sélectionnant le terminal du passager voulu.

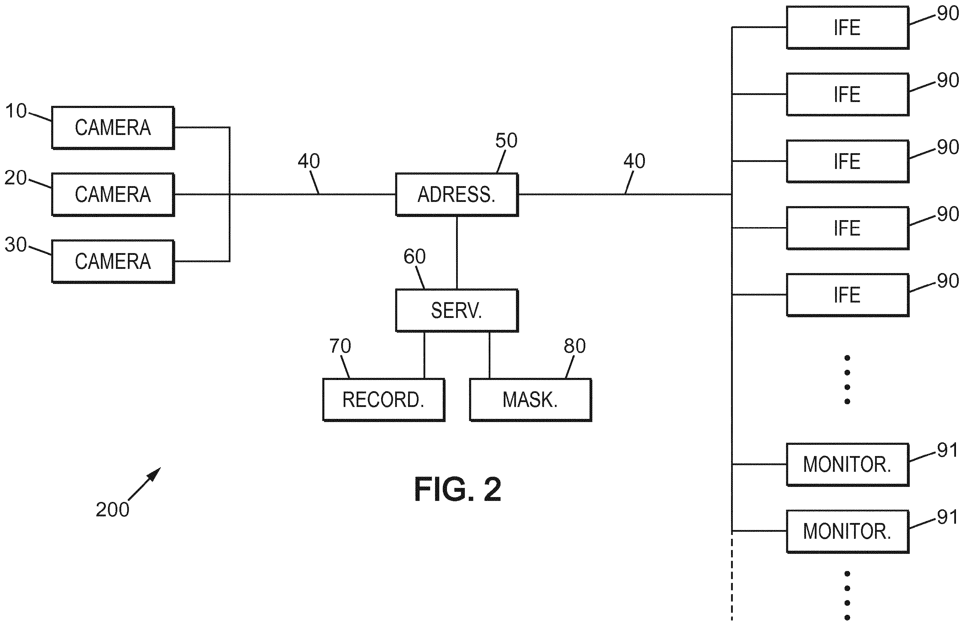

Les références qui sont indiquées dans le schéma de la figure 2 ont les significations suivantes :
- 200: le réseau de communication dans son ensemble
- 10-30: les caméras déjà introduites
- 40: les liaisons de communication
- 50: l'unité d'adressage ou de commande de commutateurs, notée ADRESS.
- 60: serveur, noté SERV.
- 70: enregistreur vidéo, noté RECORD., pour enregistrer les images saisies par les caméras 10-30
- 80: unité de filtrage, notée MASK., pour rechercher les visages ou les silhouettes de passagers qui sont présentes dans chaque image saisie par l'une des caméras 10-30, et pour superposer localement dans l'image un brouillage ou un masque à l'emplacement de chaque visage ou silhouette
- 90: les terminaux de divertissement en vol, notés IFE
- 91: des terminaux de surveillance, notés MONITOR.

Evidemment, la topologie du réseau de communication 200 qui est représentée sur la figure 2 n'a qu'un but d'exemple, et peut être remplacée par toute autre topologie de réseau en fonction du mode d'adressage et de communication qui est mis en œuvre.

Possiblement, l'unité de filtrage 80 peut incorporer une unité de comptage (non représentée), pour décompter les visages ou les silhouettes humaines différentes qui sont trouvées par l'unité de filtrage à l'intérieur de chaque image. Le résultat du décompte peut être transmis à l'un des terminaux de divertissement en vol 90 sur lequel une commande a été saisie par un passager, et/ou optionnellement à l'un des terminaux de surveillance 91.

Possiblement encore, certains éléments du réseau de communication 200 peuvent être partagés avec un système de surveillance vidéo de cabine (désigné par l'acronyme CVMS pour «cabin video monitoring system» en anglais) tel que déjà mis en œuvre dans certains avions, et décrit par exemple dans le brevet US 8,127,333.

Par ailleurs, une borne d'alimentation en énergie électrique, pour fournir la puissance qui est nécessaire au fonctionnement de certains au moins des éléments du réseau 200, peut être prévue pour raccorder le réseau à une source d'énergie qui est externe à l'avion 100. Ainsi, le réseau 200 peut être utilisé lorsque l'avion 100 est au parking et que des passagers sont déjà à bord, sans provoquer de consommation énergétique excessive par rapport à la capacité du système autonome de production électrique de l'avion qui est alors activé.

Enfin, le réseau de communication 200 peut être muni d'une sortie de transfert de données, destinée à être raccordée à une unité de visualisation qui est externe à l'avion 100. De cette façon, les images qui sont saisies par les caméras 10-30 sont aussi accessibles par un agent autorisé, à partir d'un poste qui est situé à l'extérieur de l'avion 100. Une telle possibilité de visualisation depuis l'extérieur de l'avion peut être utile à des fins de sécurité ou de gestion de l'embarquement ou du débarquement des passagers.

Il est entendu que l'invention peut être reproduite en en modifiant certains aspects secondaires par rapport à la description qui vient d'en être donnée. Par exemple, les liaisons de communication du réseau interne à l'avion peuvent être filaires ou conformes à un mode de transmission sans fil, par exemple de type wifi. Enfin, l'invention est compatible avec de multiples façons d'afficher sur les terminaux de divertissement en vol, les données qui sont déduites des images saisies par les caméras.

## Revendications

1. Réseau de communication (200) pour avion (100) comprenant :
- des terminaux de divertissement en vol (90), qui sont destinés individuellement à des passagers de l'avion ;
- un système d'adressage (50) ; et
- des liaisons de communication (40) reliant entre eux les terminaux et le système d'adressage,
**caractérisé en ce qu'**il comprend en outre plusieurs caméras (10-30) destinées à être installées à l'intérieur de l'avion (100), de sorte qu'un champ optique de chaque caméra comprenne une zone d'accès collective ou une zone à utilisation partagée interne à l'avion, qui est différente de la zone comprise dans le champ optique de chaque autre caméra ; chaque caméra (10-30) étant connectée aux liaisons de communication (40) du réseau (200),
et **en ce que** chaque terminal de divertissement en vol (90) est adapté pour :
- recueillir une commande de la part du passager correspondant, ladite commande concernant l'une quelconque des caméras (10-30), puis
- transmettre ladite commande au système d'adressage (50),
et le système d'adressage est adapté pour :
- transmettre, en réponse à ladite commande, au moins une donnée résultant d'au moins une acquisition d'image réalisée par ladite une quelconque des caméras, via les liaisons de communication (40) au terminal de divertissement en vol (90) qui a recueilli la commande, de sorte que ladite une quelconque des caméras est à l'origine de ladite donnée,
et ledit terminal de divertissement en vol est adapté pour :
- communiquer ladite donnée au passager correspondant, en liaison avec une indication de la zone interne à l'avion (100) où est installée ladite une quelconque des caméras (10-30),
dans lequel chaque terminal de divertissement en vol (90) comprend un écran, et est adapté pour afficher au moins une partie d'un plan intérieur de l'avion (100), et pour afficher ladite donnée en liaison avec une localisation dans le plan de la zone correspondant à ladite une quelconque des caméra (10-30),
afin de fournir au passager correspondant une aide pour faciliter ses déplacements à l'intérieur de l'avion.

2. Réseau selon la revendication 1, dans lequel chaque terminal de divertissement en vol (90) comprend un écran, et les données transmises par le système d'adressage (50) en réponse à la commande, comprennent au moins un extrait de l'image acquise par la caméra (10-30), et le terminal de divertissement en vol est adapté pour afficher au moins l'extrait de l'image sur l'écran.

3. Réseau selon la revendication 2, comprenant en outre au moins une unité de filtrage (80), connectée de façon à être activée pour chaque extrait d'image qui est transmis à l'un des terminaux de divertissement en vol (90), ladite unité de filtrage étant adaptée pour rechercher un visage ou une silhouette humaine à l'intérieur de l'extrait d'image, et pour remplacer ledit visage ou silhouette humaine par un masque ou un brouillage dans l'extrait d'image tel qu'affiché sur l'écran.

4. Réseau selon l'une quelconque des revendications précédentes, comprenant en outre une unité de comptage, agencée de façon à être activée pour chaque image qui est traitée en réponse à une commande recueillie par l'un des terminaux de divertissement en vol (90), ladite unité de comptage étant adaptée pour compter des personnes qui sont présentes dans l'image, et transmettre un résultat de comptage au terminal de divertissement en vol en tant que donnée résultant de l'acquisition d'image, et le terminal de divertissement en vol est adapté pour communiquer ledit résultat de comptage au passager correspondant.

5. Réseau selon l'une quelconque des revendications précédentes, comprenant en outre au moins un terminal de surveillance (91) destiné à un membre d'équipage de l'avion (100), et connecté aux liaisons de communication (40) du réseau (200) de sorte qu'au moins une donnée résultant d'au moins une acquisition d'image qui a été réalisée par l'une quelconque des caméras (10-30) soit transmise au terminal de surveillance ;
et le terminal de surveillance (91) est adapté pour communiquer la donnée au membre d'équipage.

6. Réseau selon la revendication 5, dans lequel chaque terminal de divertissement en vol (90) est adapté en outre pour recueillir une commande d'appel, et les liaisons de communication (40) sont adaptées pour transmettre ladite commande d'appel au terminal de surveillance (91), ledit terminal de surveillance étant adapté pour communiquer la commande d'appel au membre d'équipage, et le réseau (200) est adapté pour établir une session de communication bidirectionnelle entre un terminal de divertissement en vol qui a recueilli une commande d'appel et le terminal de surveillance qui est destinataire de ladite commande d'appel.

7. Réseau selon la revendication 6, adapté pour que la session de communication bidirectionnelle entre le terminal de divertissement en vol (90) qui a recueilli une commande d'appel et le terminal de surveillance (91) qui est destinataire de ladite commande d'appel comprenne des flux audio, ledit terminal de divertissement en vol et ledit terminal de surveillance étant pourvus chacun d'un microphone et d'au moins un écouteur.

8. Avion (100) équipé d'un réseau de communication (200) conforme à l'une quelconque des revendications précédentes.

9. Avion selon la revendication 8, dans lequel chaque zone d'accès collective ou zone à utilisation partagée qui est desservie par une caméra (10-30), est sélectionnée parmi une zone d'accès à un bar, une zone d'attente à un comptoir de restauration ou de vente d'articles variés (1), une zone de détente, un couloir de circulation des passagers, un vestibule, une zone intermédiaire entre deux salles de cabine (2), et une zone d'attente à une cabine de toilettes, de lavabo ou de change pour bébé (3).

## Patentansprüche

1. Kommunikationsnetzwerk (200) für ein Flugzeug (100), umfassend:
- Bordunterhaltung-Terminals (90), die individuell für Passagiere des Flugzeugs bestimmt sind;
- ein Adressierungssystem (50); und
- Kommunikationsverbindungen (40), welche die Terminals und das Adressierungssystem miteinander verbinden,
**dadurch gekennzeichnet dass** es weiterhin mehrere Kameras (10-30) umfasst, die dazu bestimmt sind, im Inneren des Flugzeugs (100) installiert zu sein/werden, so dass ein optisches Feld jeder Kamera einen Bereich für einen kollektiven Zugang oder einen Bereich zur gemeinsamen Nutzung innerhalb des Flugzeugs umfasst, der sich von dem Bereich unterscheidet, der im optischen Feld jeder anderen Kamera enthalten ist;
wobei jede Kamera (10-30) mit den Kommunikationsverbindungen (40) des Netzwerks (200) verbunden ist,
und dadurch, dass jedes Bordunterhaltung-Terminal (90) angepasst ist, um:
- einen Befehl von dem entsprechenden Passagier zu erhalten, wobei der Befehl die eine der Kameras (10-30) betrifft, dann
- den Befehl an das Adressierungssystem (50) zu senden,
und das Adressierungssystem angepasst ist, um:
- in Reaktion auf den Befehl wenigstens ein Datenelement, das aus wenigstens einer von der einen der Kameras durchgeführten Bildaufnahme resultiert, über die Kommunikationsverbindungen (40) zu dem Bordunterhaltung-Terminal (90) zu senden, das den Befehl erhalten hat, so dass die eine der Kameras der Ursprung des Datenelements ist,
und wobei das Bordunterhaltung-Terminal angepasst ist, um:
- dieses Datenelement an den entsprechenden Passagier zu übermitteln, in Verbindung mit einer Angabe des inneren Bereichs des Flugzeugs (100), wo die eine der Kameras (10-30) installiert ist,
wobei jedes Bordunterhaltung-Terminal (90) einen Bildschirm umfasst und dazu angepasst ist, wenigstens einen Teil eines Innenraum-Plans des Flugzeugs (100) anzuzeigen, und um das Datenelement in Verbindung mit einer Ortsangabe in dem Plan des Bereichs anzuzeigen, welcher der einen der Kameras (10-30) entspricht, um den Passagier dabei zu unterstützen, seine Bewegungen im Inneren des Flugzeugs zu erleichtern.

2. Netzwerk nach Anspruch 1, wobei jedes Bordunterhaltung-Terminal (90) einen Bildschirm umfasst, und die vom Adressierungssystem (50) in Reaktion auf den Befehl übertragenen Daten wenigstens einen Ausschnitt des von der Kamera (10-30) aufgenommenen Bildes umfassen, und das Bordunterhaltung-Terminal dazu angepasst ist, wenigstens den Ausschnitt des Bildes auf dem Bildschirm anzuzeigen.

3. Netzwerk nach Anspruch 2, ferner umfassend wenigstens eine Filtereinheit (80), die so angeschlossen ist, dass sie für jeden Bildausschnitt aktiviert wird, der an eines der Bordunterhaltung-Terminals (90) übertragen wird; wobei die Filtereinheit angepasst ist, um nach einem menschlichen Gesicht oder einem menschlichen Umriss innerhalb des Bildausschnitts zu suchen und das menschliche Gesicht oder den menschliche Umriss durch eine Maske oder eine Störung in dem Bildausschnitt zu ersetzen, wie er auf dem Bildschirm angezeigt wird.

4. Netzwerk nach einem der vorhergehenden Ansprüche, ferner umfassend eine Zähleinheit, die so angeordnet ist, dass sie für jedes Bild aktiviert wird, das in Reaktion auf einen Befehl verarbeitet wird, der von einem der Bordunterhaltung-Terminals (90) erhalten wird, wobei die Zähleinheit angepasst ist, um Personen zu zählen, die in dem Bild vorhanden sind, und um ein Zählergebnis an das Bordunterhaltung-Terminal als Datenelement zu senden, das aus der Bildaufnahme resultiert, und wobei das Bordunterhaltung-Terminal dazu angepasst ist, das Zählergebnis dem entsprechenden Passagier mitzuteilen.

5. Netzwerk nach einem der vorhergehenden Ansprüche, ferner umfassend wenigstens ein Überwachungsterminal (91), das für ein Besatzungsmitglied des Flugzeugs (100) bestimmt und mit den Kommunikationsverbindungen (40) des Netzwerks (200) verbunden ist, so dass wenigstens ein Datenelement, das aus wenigstens einer Bildaufnahme resultiert, die von der einen der Kameras (10-30) ausgeführt wurde, an das Überwachungsterminal übertragen wird;
und wobei das Überwachungsterminal (91) dazu angepasst ist, das Datenelement an das Besatzungsmitglied zu übermitteln.

6. Netzwerk nach Anspruch 5, wobei jedes Bordunterhaltung-Terminal (90) weiter dazu angepasst ist, einen Anrufbefehl zu erhalten, und die Kommunikationsverbindungen (40) angepasst sind, um den Anrufbefehl an das Überwachungsterminal (91) zu übertragen, wobei das Überwachungsterminal angepasst ist, um den Anrufbefehl an das Besatzungsmitglied zu übermitteln, und das Netzwerk (200) angepasst ist, um eine bidirektionale Kommunikationsverbindung-Sitzung zwischen einem Bordunterhaltung-Terminal, das einen Anrufbefehl erhalten hat, und dem Überwachungsterminal einzurichten, welches der Adressat des Anrufbefehls ist.

7. Netzwerk nach Anspruch 6, das dazu angepasst ist, dass die bidirektionale Kommunikationsverbindung-Sitzung zwischen dem Bordunterhaltung-Terminal (90), das einen Anrufbefehl erhalten hat, und dem Überwachungsterminal (91), das der Adressat dieses Anrufbefehls ist, Audiostreams umfasst, wobei das Bordunterhaltung-Terminal und das Überwachungsterminal jeweils ein Mikrofon und wenigstens einen Ohrhörer aufweisen.

8. Flugzeug (100), das mit einem Kommunikationsnetzwerk (200) gemäß einem der vorhergehenden Ansprüche ausgestattet ist.

9. Flugzeug nach Anspruch 8, wobei jeder Bereich für einen kollektiven Zugang oder Bereich zur gemeinsamen Nutzung, der von einer Kamera (10-30) betreut wird, ausgewählt ist aus einem Bar-Zugangsbereich, einem Wartebereich an einem Catering- oder Verkaufstresen für verschiedene Artikel (1), einem Entspannungsbereich, einem Korridor für den Passagierverkehr, einem Vorraum, einem Zwischenbereich zwischen zwei Kabinenräumen (2) und einem Wartebereich bei einer Toilettenkabine, einem Waschraum oder einer Wickelkabine (3).

## Claims

1. Communication network (200) for an aircraft (100) comprising:
- in-flight entertainment terminals (90), intended for individual use by passengers of the aircraft;
- an addressing system (50); and
- communication links (40) connecting the terminals and the addressing system,
**characterized in that** it also comprises a plurality of cameras (10-30) intended for installation inside the aircraft (100), so that an optical field of each camera comprises a common access area or a shared use area inside the aircraft, which is different from the optical field of each other camera, each camera (10-30) being connected to the communication links (40) of the network (200),
and **in that** each in-flight entertainment terminal (90) is adapted to :
- receive a command from the corresponding passenger, said command concerning any one of the plurality of cameras (10-30), then
- forward said command to the addressing system (50),
and the addressing system is adapted to:
- send, in response to said command, at least one data item resulting from at least one image acquisition carried out by said any one of the plurality of cameras, via the communication links (40) to the in-flight entertainment terminal (90) that received the command, whereby said any one of the plurality of cameras is the source of said data item,
and said in-flight entertainment terminal is adapted to communicate said data item to the corresponding passenger, in relation with an indication of the area inside the aircraft (100) where aid any one of the plurality of cameras from which said data item originates is installed,
in which each in-flight entertainment terminal (90) comprises a screen, and is adapted to display at least part of an interior plan of the aircraft (100), and to display each data item together with a location on the plan of the area corresponding to the camera (10-30) from which said data item originates,
in order to provide the corresponding passenger with a help to facilitate his/her moves inside the aircraft.

2. Network according to claim 1, in which each in-flight entertainment terminal (90) comprises a screen, and the data sent by the addressing system (50) in response to the command, comprises at least one extract from the image acquired by the camera (10-30), and the in-flight entertainment terminal is adapted to display on the screen at least the extract of the image.

3. Network according to claim 2, also comprising at least one filtering unit (80), connected so as to be activated for each image extract that is sent to one of the in-flight entertainment terminals (90), said filtering unit being adapted to search for a face or a human silhouette within the image extract, and to replace said face or human silhouette with masking or blurring in the image extract as displayed on the screen.

4. Network according to any one of the preceding claims, also comprising a counting unit, arranged so as to be activated for each image that is processed in response to a command received by one of the in-flight entertainment terminals (90), said counting unit being adapted to count people who are present in the image and send a counting result to the in-flight entertainment terminal as a data item resulting from the image acquisition, and the in-flight entertainment terminal is adapted to communicate said counting result to the corresponding passenger.

5. Network according to any one of the preceding claims, also comprising at least one monitoring terminal (91) that is intended for a crew member of the aircraft (100), and connected to the communication links (40) of the network (200) so that at least one data item resulting from at least one image acquisition that has been carried out by any one of the cameras (10-30) is sent to the monitoring terminal;
and the monitoring terminal (91) is adapted to communicate the data item to the crew member.

6. Network according to claim 5, in which each in-flight entertainment terminal (90) is also adapted to receive a call command, and the communication links (40) are adapted to forward said call command to the monitoring terminal (91), said monitoring terminal being adapted to communicate the call command to the crew member, and the network (200) is adapted to establish a bidirectional communication session between an in-flight entertainment terminal that has received a call command and the monitoring terminal that is the addressee of said call command.

7. Network according to claim 6, adapted so that the bidirectional communication session between the in-flight entertainment terminal (90) that has received a call command and the monitoring terminal (91) that is the addressee of said call command comprises audio streams, said in-flight entertainment terminal and said monitoring terminal each being provided with a microphone and at least one earphone.

8. Aircraft (100) equipped with a communication network (200) according to any one of the preceding claims.

9. Aircraft according to claim 8, in which each common access area or shared use area that is served by a camera (10-30) is selected from a bar access area, a waiting area for a counter for refreshments or for sale of various articles (1), a relaxation area, a passenger aisle, an entrance area, an intermediate area between two cabins (2), and a waiting area for toilets, washroom or baby change (3).
